# EUROPEAN PATENT SPECIFICATION

(11) **EP 0 707 914 B1**
(45) Date of publication and mention of the grant of the patent: **06.10.1999**
(21) Application number: 95830334.9
(22) Date of filing: 27.07.1995
(51) Int. Cl.: B23D 36/00, B23D 45/20

(54) **A device for the automatic control of an operating head of a cutter to form pieces of tubes of reduced lengths starting from a tube externally corrugated, continuously received from a moulding machine**
Eine Vorrichtung zum automatischen Steuern des Kopfes einer Schneidmaschine zum Herstellen von kurzen Rohrstücken ausgehend von einem kontinuierlich von einer Formmaschine gelieferten Wellrohr
Un dispositif pour la commande automatique d'une tête de coupe destinée à former des portions de tubes de longueur réduite à partir d'un tube annelé extérieurement, issu en continu d'une machine de moulage

(30) Priority: 19.10.1994 IT BO940460
(43) Date of publication of application: 24.04.1996
(73) Proprietor: SICA S.P.A., 48011 Alfonsine (Ravenna) (IT)
(72) Inventor: Savioli, Leopoldo, I-48011 Alfonsine (Ravenna) (IT)
(74) Representative: Lanzoni, Luciano

(56) References cited:
- DE-A- 3 112 519
- FR-A- 2 690 373
- US-A- 2 866 257
- US-A- 3 843 758

## Description

The invention relates to a device for the automatic control of an operating head of a cutter, to form short lengths of tubing starting from a tube, continuously received from a moulding machine, in which the operating head moves lengthwise along the tube alternately from a first extreme position in which the head engages the tube, and translates along the cutter together with it and cuts the tube to a second extreme position in which the head disengages from the tube and reverses its movement with regard to the tube which continues to advance along the cutter. the head then returns to its first position; see DE-A 3112519

The cutters mentioned above are used, as already known, for the automatic production of short lengths of tubing that can be used as a finished product or as an unfinished product for a wide variety of uses.

For some time there has been widespread use of pieces cut from externally corrugated tubing which can be cut with ease and a certain regularity provided the cutting tool is located exactly on those parts of the tube located between two consecutive projections of the same corrugation.

For this reason, the cutters of a known type are equipped with special mechanical devices in turn fitted with a cam wheel which explores the outer surface of the tube leaving the moulding machine in a continuous motion towards the cutter. The device works in such a way as to subordinate the signal stimulating the activation of the operating head (which is sent regularly to the cutter each time the desired length is obtained (i.e. length control of the piece)), to the insertion of the cam wheel between the two consecutive projections of the tube (i.e. checking the new position of the head resulting from the presence of the corrugation).

The cam wheel explores different parts of the tube from those on which the head operates, while the regularity of the tube corrugation together with the mechanical correlation existing between the position of the cam wheel and that of the operating head make it possible to position the cutting tool correctly.

While these devices allow the regular operation of production lines of pieces of externally corrugated tubes, they cannot be used in those cases, occurring more and more frequently, where the corrugation of the tube is hidden by films or coating layers which are applied before the cut, to satisfy the requirements dictated by the introduction of new uses.

The aim of the present invention, as characterized in appended claim 1, is to solve the problem of the automatic control of the operating head, to form regular pieces of tube starting from an externally coated, corrugated tube whose corrugation is thus inaccessible.

The present invention attains its purposes by means of a device having the features of claim 1.

The present invention resolves a problem not previously solved because it can be used for smooth, corrugated and externally corrugated tubes in which the corrugation has been coated.

A further advantage of the present invention is that it carries out the control both of that length of the single pieces and the correction to be carried out on that length directly through the cutter in order to position the operating head correctly with regard to the projections of the corrugation. This characteristic is not found in the plants of the prior art where, on the contrary, the control of the length is carried out by devices placed on the moulding machine which control the activation of the cutter, making the latter partly dependant on the moulding machine.

Further advantages and characteristics of the present invention will better emerge from the detailed description that follows, made with reference to the accompanying drawings, which represent a preferred embodiment here illustrated in the form of a non-limiting example, and in which:
- Fig. 1 illustrates the front view of a cutter fitted with a device according to the present invention;
- Figs. 2 and 3 illustrate a side view of the invention on a larger scale in operating and non operating positions respectively;
- Fig. 4 illustrates a view from above of the device illustrated in Fig. 3;
- Figs. 5 and 6 illustrate views of some details of the invention represented on a larger scale in which some parts have been omitted in order to highlight others:
- Fig. 7 illustrates a front view of a detail of Fig. 5;
- Fig. 8 illustrates a detail shown in Fig. 7 sectioned according to line VIII-VIII

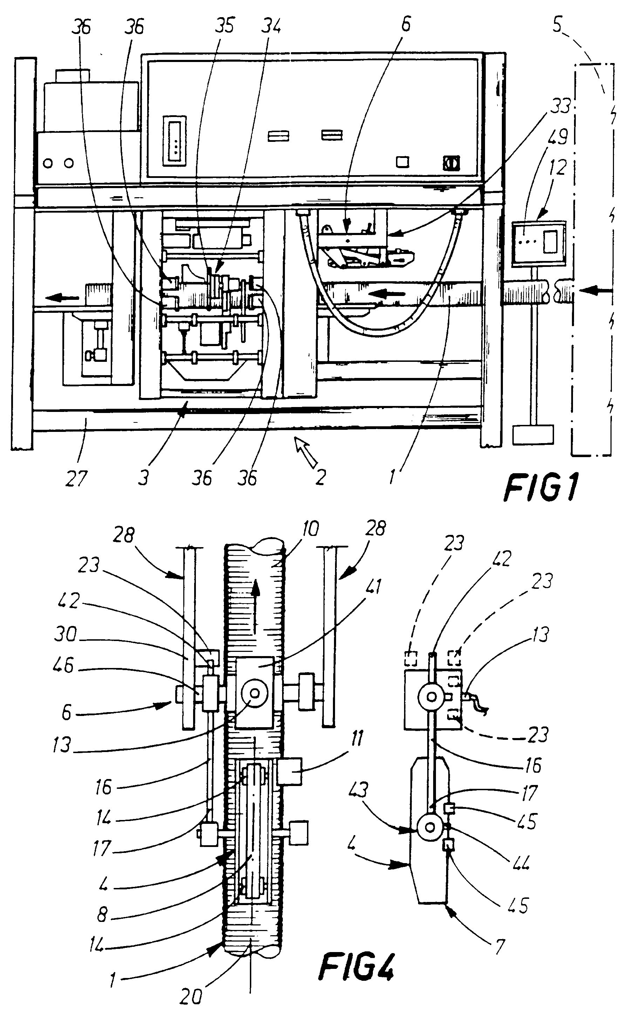

With reference to the figures, Fig. 1 stresses the fact that the invention substantially consists of a device (33) for automatic control of the operating head (3) of a cutter (2) to make short lengths of tubing (1) starting from a tube (1) continuously received from a moulding machine (5) in line with the cutter (2) and schematically represented.

The tube (1) is externally corrugated and is preferably made of plastics which are continuously extruded by the moulding machine (5). The tube (1) can also be coated with layers of coating material of varying thickness, that are not represented in the figure because they can totally hide the external corrugation.

The operating head (3) of the cutter (2) is fitted with a known cutting group (34) which is fitted with relevant tools (35) and equipped with a system of clamps (36) coaxial to the tube (1) and block it during the operation of the cutting group (34).

The above mentioned head (3) is supported by the structure (27) of the cutter (2) in such a way as to allow coaxial, alternating movement between the two extreme positions with respect to the tube (1).

In the first extreme position, the head (3) moves towards the left (see fig.1) translating along the cutter (2) with the same speed as the tube (1) and then, engaging the tube (1), blocks it with the clamps (36) and performs the cut.

In the second extreme position, which is reached on completing the cut of the piece of tube (1), the clamps (36) open and release the operating head (3) from the tube (1). After that the said operating head (3) inverts its movement with respect to the tube (1), which continues to move at the same, constant speed along the cutter (2), and then returns to the first position to repeat the production cycle of a new piece of tube (1).

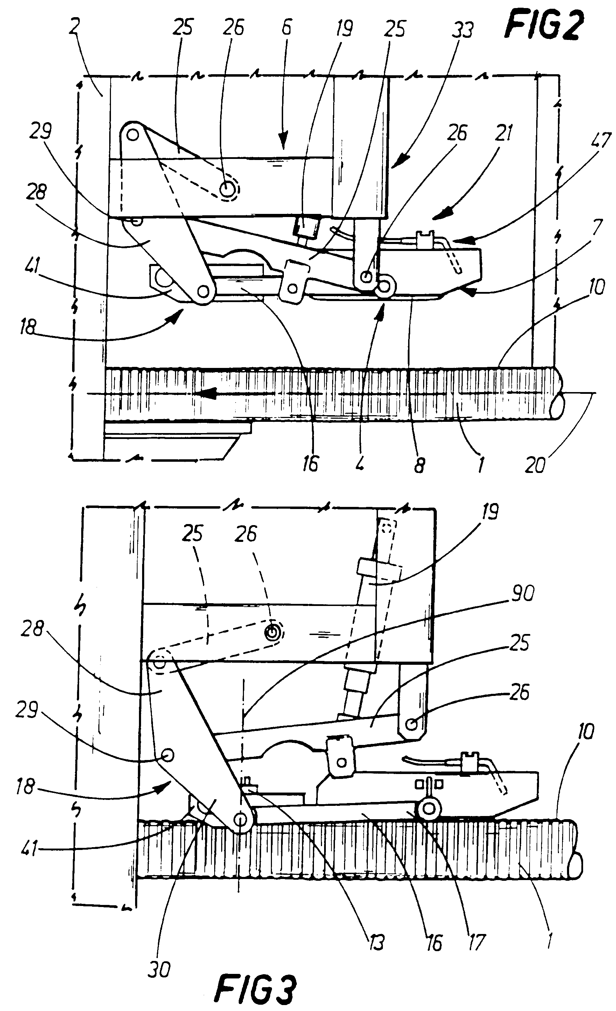

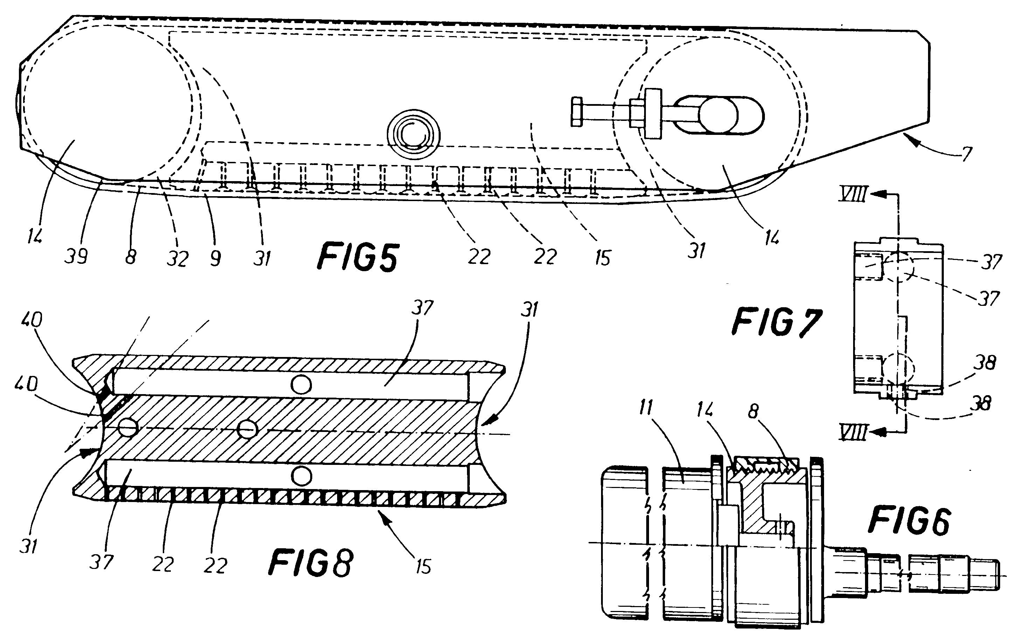

The device (33) for automatic control fitted to the cutter (2) essentially includes (figures 2-3-4-5):
- a detector of the length (4) of the tube (1) designed to come into contact with the outer surface (10) of the tube (1) by means of the track (8);
- a support (6) to hold in position the detector (4) of the length;
- a transducer (11) fitted with an encoder, coupled with the track (8) (Fig. 6) to detect the rotation corresponding to the length of the tube (1) passing through the cutter (2);
- a detector (13) of the thickness of the tube (1) (Figs. 3-4), preferably made of a capacitive sensor, capable of detecting the variations of the thickness of the tube (1) caused by its corrugation;
- control means (12) interfaced with the transducer (11), the detector of the thickness (13) and the operating head (3) to process the signals received from the transducer (11) and from the detector of the thickness (13). The said signals are then processed in turn in relation to the length predetermined for the cutting of the piece of tube (1) so as to correct the said value according to the corrugation and so as to activate and disactivate the head operator (3) correspondingly.

The detector (4) of the length of the tube (1), is provided with a bearing structure (7) including two rollers (14) assembled in a freely rotating way around which the track (8) passes in the form of a ring , thus becoming able to rotate freely on the structure (7).

The detector of the length, in turn, (4) is supported by the head (3) of the cutter (2) by means of the said support (6) which, as will be illustrated in the following description, is designed in such a way as to keep the detector (4) of the length in alignment with the tube (1), thus permitting the positioning of the track (8) in contact with the outer surfaces (10) in such a way as to be pulled into movement by the friction of the tube (1).

Positioned between the rollers (14), the detector (4) of the length requires a plate (15) fixed to the structure (7) of the detector (4) to come into contact with the track (8) from the inside of the ring at the point of one of its lower branches (9) which is designed to come into contact with the outer surface (10) of the tube (1).

The plate (15) is preferably made out of polythene, a material which has a low grazing friction coefficient. The said plate is also equipped with a plurality of small parallel channels (22) which are laid out along two parallel rows (38) (figures 7-8) according to the thickness of the plate (15).

The small channels (22) are joined to the device (33) by air supplying means (21) and they can carry pressurized fluids (preferably compressed air) between the plate (15) and the track (8), thus further reducing the friction between them and simultaneously increasing the adhesive force between the track (8) and the outer surface (10) of the tube (1).

The compressed air is conveyed to the said small channels (22) from a feeding manifold of larger dimensions, which crosses the plate (15) lengthwise.

As shown in Figs. 5-8, the plate (15) presents two ends (31) shaped in a way which is complementary to the lateral surface (39) of the rollers (14).

The said ends (31) delimit a passage, also by means of the roller (14) linked to the transducer (11), which is fed with compressed air by means of a manifold (37) through two small tilted channels (40) having reciprocally intersecting axes so that the compressed air conveyed to the passage (32) permits the rotation of the roller (14) ensuring the best operative conditions for the transducer (11) connected to the said roller (14).

As can be seen from Figs. 2-3, the support (6) of the device (33) includes a mobile apparatus (18) to vary the position of the detector (13) of the thickness and that of the transducer (11) according to the external surface (10) of the tube (1) when its overall dimensions change.

The said apparatus (18) operates in conjunction with two four-bar linkages which are joined to each other by means of interposed bars (46).

Each four-bar linkage is equipped with two equalizers (25) mounted onto the structure (27) of the cutter (2) in such a way as to allow a rotating motion along their first ends (26).

Each four-bar linkage is also equipped with a connecting rod (28) which is fixed to the opposite ends (29) of the equalizers (25) allowing a rotating motion.

The connecting rod (28) holds up one support (41) of the detector (13) of the thickness along a section projecting from the four-bar linkage towards the underlying tube (1).

A pneumatic actuator (19) acting between the fixed structure (27) of the cutter (2) and one of the equalizers (25), makes it possible to activate the four-bar linkage, thus allowing the lifting and the lowering of the whole device (33) while keeping the orientation of the detector (13) of the thickness constant with respect to the central axis (20) of the tube (1).

When in working operation, the four-bar linkage allows the bar (46) to move with a constant motion along a vertical line (90) with respect to the tube (1), without ever changing the orientation of the capacitive transducer with respect to the tube (1) or the orientation of the detector of the length (4) to which it is connected. This allows the device to work at a constant and very high operational standard without requiring any modification of the calibration of the device (33) when the dimensions of the tube (1) vary.

As can be seen in Figs. 2-3-4, the structure (7) of the detector (4) of the length envisages the existence of an arm (16) which projects from the connecting rod (28) supporting the detector (4) of the length at one free end (17).

The arms (16) are fixed to the projecting part (30) of the connecting rod (28) so as to swing with respect to the support (6). For this reason, the said arms (16) are fixed to the connecting rod (28) in such a way as to allow rotation on the connecting rod (28). One of their appendices (42) is placed between the two fixed strikers (23) of the connecting rod (28) which holds up the arm (16) allowing the detector (4) of the length to adapt automatically to any irregularity of the outer surface (10) of the tube (1) or of its coating.

A further improvement of the self-adjusting capability is represented by the fact that the track (8) too is assembled on the structure (7) in a floating way. In fact, Fig. 4 shows that the detector (4) of the length engages the arm (16) which holds it up through a linking means (43) which includes an appendix (44) interacting with two bilateral strikers (45) and which are supported by the detector (4) itself.

An analogous solution is also employed in the connection of the support (41) of the capacitive detector to the connecting bar (46) of the four-bar linkage which holds it up between the projections of the connecting rods (28).

A further advantage of the present invention is represented by the existence of a nozzle (47) supported by the structure (7) of the detector (4) of the length which is used to send jets of compressed air onto the tube (1) coming from the moulding machine (5) in order to remove all impurities or drops of water left over from previous operations which could prevent the detector (4) of the length from working perfectly.

As regards the said control means (12), it is worth stressing that they should preferably be composed of electronic circuits housed in a programming board (49). As already indicated, the circuits are interfaced with the encoder transducer (11) of the lengths of the tube (1).

The said lengths are detected by the capacitive sensor detector (13) of the thickness and by the operating head (3) of the cutter (2) operating according to the sequence illustrated here under which several phases are envisaged starting with the device (33)in its off position, shown in Fig. 2:
- the lowering of the device (33) onto the tube (1); (Fig. 3) the pulling force exerted on the track (8) of the detector (4) of the length;
the rotation of the encoder length transducer (11); in this phase the outline of the corrugation of the tube (1) is established by means of the capacitive sensor detector (13) of the thickness.

The control means (12) process the signals received, constantly correlating the outline of the corrugation read by the capacity sensor with the length of the tube (1) advancing towards the cutter (2). Finally the said control means (12) store the outline of the detected corrugation and process the previously received signals enabling the identification and elimination of those values that are incompatible with the real form of the corrugation. They can be the result of the lack of consistency in the material, or due to the presence of air between the layers of coating or to irregularities that can alter the reading of the encoder and that of the capacitive sensor. In short, the geometric outline of the corrugation is detected, processed and stored during the time needed to reach the required length of the piece of tube (1).
- the initiation of the control of the operating head (3) which, since it is moved at a speed faster than that of the forward motion of the tube (1), can take the tool (35) to the right cutting position in which the clamps (36) block the tube (1) while the operating head (3) synchronizes its speed with that of the tube (1) performing the cutting simultaneously. When the said phase is over the following occurs:
- the clamps (36) open;
- the operating head (3) resumes its starting position to begin a new working phase.

The present invention, as above described, can undergo numerous changes without falling outside the field of the invention as claimed. Furthermore all the above mentioned parts can be replaced with elements equivalent from a technical point of view.

## Claims

1. Device for the automatic control of an operating head (3) of a cutter (2), to form short lengths of tubing (1) starting from a tube (1), continuously received from a moulding machine (5), in which the operating head (3) moves lengthwise along the tube (1) alternately from a first extreme position in which the head (3) engages the tube (1) and translates along the cutter (2) together with it and cuts the tube at a second extreme position at which point the head (3) disengages from the tube (1) and reverses its movement with regard to the tube (1) which continues to advance along the cutter (2); the head then returns to its first position;
the said device is characterized by the fact that it comprises:
- a detector of the length (4) of the tube (1) having a bearing structure (7) which bears two rollers (14) round which at least one track (8) is wound to form the shape of a ring in such a way as to permit free rotation;
- a support (6) for the said detector (4) of the length fixed to the head (3) of the cutter (2) so as to keep the said track (8) in alignment and in contact with the outer surface of the tube (1) in such a way that the said track (8) is pulled into motion onto the structure (7) of the detector (4) of the length by the movement of the tube itself (1);
- a transducer (11) coupled with the track (8) capable of detecting the length of the tube (1) received from the said cutter (2);
- control means (12) interfaced with the said transducer (11) and the said operating head (3) so as to receive the signals coming from the transducer (11), and process them at least according to a predetermined length value for the pieces of tube (1) and to activate and disactivate the operating head (3).

2. A device as in claim 1, characterized in that it comprises a detector (13) of the thickness of the tube (1) fixed to the said support (6) and interfaced with control means (12) in order to send them the thickness of the tube (1) which is detected when the said tube (1) moves towards the cutter (2).

3. A device, as in claim 1, characterized by the fact that the said track (8) is fitted to the structure (7) in a floating way so as to self-adapt to the outer surface (10) of the tube (1).

4. A device, as in claim 1, characterized by the fact that the structure (7) includes a plate (15) located between the rollers (14); the said plate comprises ends (31) which are shaped in order to delimit, together with the said rollers (14), at least one passage-way (32) for a pressurized fluid.

5. A device as in claim 1, characterized by the fact that the said structure (7) of the detector (4) of the length comprises a plate (15) fitted in such a way as to engage the track (8) at least on its branch (9) which is in contact with the outer surface (10) of the tube (1).

6. A device, as in claim 1, characterized by the fact that the said support (6) includes at least one arm (16) which projects from the support (6) itself; the said arm (16) supports the detector of the length (4) at its free end (17).

7. A device, as in claim 1, characterized by the fact that the said transducer (11) includes an encoder.

8. A device, as in claim 2, characterized by the fact that the said detector (13) of the thickness of the tube (1) comprises a capacitive sensor.

9. A device as in claim 2, characterized by the fact that the said support (6) includes an apparatus (18) which becomes mobile on the activation of the actuator (19) in such a way as to vary the position of the detector (13) of thickness with respect to the tube (1) when the overall dimensions of the said tube (1) are changed; the said apparatus (18) keeps the orientation of the detector (13) of the thickness constant with respect to the centre line (20) of the tube (1).

10. A device as in claim 2, characterized by the fact that the said detector (13) of the thickness is fitted in an elastic way so as to swing on the said support (6).

11. A device as in claim 4 or 5, characterized by the fact that the said structure (7) includes means (21) feeding pressurized fluids to the detector (4) of the length.

12. A device as in claim 5, characterized by the fact that the said plate (15) is made of material having a low friction coefficient.

13. A device, as in claim 5, characterized by the fact that the said plate (15) is provided with a plurality of channels (22) to send the pressurized fluid between the plate (15) and the track (8).

14. A device, as in claim 6, characterized by the fact that the said support (6) includes two fixed strikers (23); the said arm (16) is fixed on the support (6) between the said strikers (23) in such a way as to enable its rotation so as to be projectingly sustained to produce its angular swing.

15. A device as in claim 9, characterized by the fact that the said mobile apparatus (18) includes at least one four-bar linkage provided with two equalizers (25) which are fitted to the structure (27) of the cutter (2) on their first ends (26) in such a way as to rotate; the said mobile apparatus also comprises a connecting rod (28) connected to the opposite ends (29) of the equalizers (25) in such a way as to rotate while the connecting rod (28) holds up the said detector (13) of the thickness at one of its parts (30) projecting from the said four-bar linkage in order to keep it constantly mobile on a vertical line (90) with respect to the tube (1).

16. A device as in claim 11, characterized by the fact that the channels (22) include manifolds (37) located on the said plate (15) that intercommunicate with the said passage-ways (32).

17. A device as in claim 12, characterized by the fact that the said plate (15) is made of polythene.

18. A device as in claim 1, characterized by the fact that it includes a nozzle (47) supported by the structure (7) of the detector (4) of the length in such a way as to direct a jet of compressed air onto the tube (1) so as to eliminate all impurities.

## Patentansprüche

1. Vorrichtung zum automatischen Steuern eines Arbeitskopfes (3) von einer Schneidmaschine (2) zum Herstellen von kurzen Rohrstücken, die kontinuierlich von einer Formmaschine (5) erhalten werden, in welcher sich der Arbeitskopf (3) in Längsrichtung entlang dem Rohr (1) bewegt, und zwar wechselweise von einer ersten extremen Position, in welcher der Kopf (3) das Rohr (1) ergreift und sich zusammen mit diesem entlang der Schneidmaschine (2) verschiebt und das Rohr dann in einer zweiten extremen Position schneidet, an welchem Punkt der Kopf (3) das Rohr (1) freigibt und seine Bewegung im Verhältnis zu dem Rohr (1) umkehrt, während letzteres an der Schneidmaschine (2) entlang weiter vorläuft; der Kopf kehrt dann in seine erste Position zurück; wobei die genannte Vorrichtung **dadurch gekennzeichnet** ist, dass sie wie folgt enthält:
- einen Abtaster (4) der Länge des Rohres (1) mit einer Trägerstruktur (7), welche zwei Rollen (14) trägt, um welche wenigstens ein Band (8) gewunden ist, um die Form eines Ringes auf solche Weise zu bilden, dass eine freie Umdrehung erlaubt wird;
- eine Halterung (6) für den genannten Längenabtaster (4), befestigt an dem Kopf (3) der Schneidmaschine (2), so dass das genannte Band (8) ausgerichtet und im Kontakt mit der äusseren Oberfläche des Rohres (1) gehalten wird, und zwar auf solche Weise, dass das genannte Band (8) durch die Bewegung des Rohres (1) selbst über die Struktur (7) des Längenabtasters (4) in Bewegung gezogen wird;
- einen Wandler (11), verbunden mit dem Band (8) und in der Lage, die Länge des von der genannten Schneidmaschine (2) erhaltenen Rohres (1) zu erfassen;
- Steuermittel (12), angeschlossen an den genannten Wandler (11) und an den genannten Arbeitskopf (3), so dass sie die von dem Wandler (11) kommenden Signale empfangen, diese wenigstens in Übereinstimmung mit einem bestimmten Längenwert des Rohrstückes (1) verarbeiten und somit den Arbeitskopf (3) aktivieren oder entaktivieren.

2. Vorrichtung nach Patentanspruch 1, **dadurch gekennzeichnet,** dass sie einen Abtaster (13) der Stärke des Rohres (1) enthalten, befestigt an der genannten Halterung (6) und angeschlossen an die Steuermittel (12), so dass diesen die Stärke des Rohres (1) signalisiert wird, welche erfasst ist, wenn sich das genannte Rohr (1) in Richtung der Schneidmaschine (2) bewegt.

3. Vorrichtung nach Patentanspruch 1, **dadurch gekennzeichnet**, dass das genannte Band (8) an der Struktur (7) auf schwimmende Weise befestigt ist, so dass es sich der äusseren Oberfläche (10) des Rohres (1) selbst anpasst.

4. Vorrichtung nach Patentanspruch 1, **dadurch gekennzeichnet**, dass die Struktur (7) eine Platte (15) enthält, angeordnet zwischen den Rollen (14); wobei die genannte Platte Enden (31) aufweist, welche so geformt sind, dass sie zusammen mit den genannten Rollen (14) wenigstens einen Durchlass (32) für eine unter Druck stehende Strömung bilden.

5. Vorrichtung nach Patentanspruch 1, **dadurch gekennzeichnet**, dass die genannte Struktur (7) des Längenabtasters (4) eine Platte (15) enthält, die auf solche Weise befestigt ist, dass sie das Band (8) wenigstens an seinem Trum (9) berührt, welcher sich im Kontakt mit der äusseren Oberfläche (10) des Rohres (1) befindet.

6. Vorrichtung nach Patentanspruch 1, **dadurch gekennzeichnet**, dass die genannte Halterung (6) wenigstens einen Arm (16) enthält, welcher sich von der Halterung (6) selbst aus erstreckt; wobei der genannte Arm (16) an seinem freien Ende (17) den Längenabtaster (4) trägt.

7. Vorrichtung nach Patentanspruch 1, **dadurch gekennzeichnet**, dass der genannte Wandler (11) einen Encoder enthält.

8. Vorrichtung nach Patentanspruch 2, **dadurch gekennzeichnet**, dass der genannte Abtaster (13) der Stärke des Rohres (1) einen kapazitiven Fühler enthält.

9. Vorrichtung nach Patentanspruch 2, **dadurch gekennzeichnet**, dass die genannte Halterung (6) ein Gerät (18) enthält, welches auf die Auslösung eines Antriebes (19) hin auf solche Weise beweglich wird, dass es die Position des Stärkenabtaster (13) im Verhältnis zu dem Rohr (1) ändert, wenn sich die Gesamtabmessungen des genannten Rohres (1) ändern; wobei das genannte Gerät die Orientierung des Stärkenabtasters (13) konstant im Verhältnis zur Mittellinie (20) des Rohres (1) hält.

10. Vorrichtung nach Patentanspruch 2, **dadurch gekennzeichnet**, dass der genannte Stärkenabtaster (13) auf elastische Weise befestigt ist, so dass er an der genannten Halterung (6) schwingt.

11. Vorrichtung nach Patentanspruch 4 oder 5, **dadurch gekennzeichnet**, dass die genannte Struktur (7) Mittel (21) zum Zuführen von unter Druck stehenden Strömungen an den Längenabtaster (4) enthält.

12. Vorrichtung nach Patentanspruch 5, **dadurch gekennzeichnet**, dass die genannte Platte (15) aus einem Material hergestellt ist, welches einen niedrigen Reibungskoeffizienten hat.

13. Vorrichtung nach Patentanspruch 5, **dadurch gekennzeichnet**, dass die genannte Platte (15) mit einer Anzahl von Kanälen (22) versehen ist, um die unter Druck stehende Strömung zwischen der Platte (15) und dem Band (8) durchzuleiten.

14. Vorrichtung nach Patentanspruch 6, **dadurch gekennzeichnet**, dass die genannte Halterung (6) zwei feststehende Ahschläge (23) enthält; wobei der genannte Arm (16) an der Halterung (6) zwischen den genannten Anschlägen (23) auf solche Weise befe-stigt ist, dass seine Umdrehung ermöglicht wird, so dass er überstehend getragen wird, um seine winkelmässiges Schwingen zu erzeugen.

15. Vorrichtung nach Patentanspruch 9, **dadurch gekennzeichnet**, dass das genannte bewegliche Gerät (18) wenigstens ein Gelenkviereck enthält, versehen mit zwei Schwinghebeln (25), welche mit ihren ersten Enden (26) auf solche Weise an der Struktur (27) der Schneidmaschine (2) befestigt sind, dass sie sich drehen; wobei das genannte bewegliche Gerät ebenfalls eine Verbindungsstange (28) enthält, angeschlossen an die entgegengesetzten Enden (29) der Schwinghebel (25) auf solche Weise, dass sie sich dreht, wobei die Verbindungsstange (28) mit einem ihrer aus dem genannten Gelenkviereck hervorstehenden Teile (30) den genannten Stärkenabtaster (13) hält, so dass dieser im Verhältnis zu dem Rohr (1) ständig entlang einer vertikalen Linie (90) beweglich gehalten wird.

16. Vorrichtung nach Patentanspruch 11, **dadurch gekennzeichnet**, dass die genannten Kanäle (22) Sammelleitungen (37) enthalten, die an der genannten Platte (15) angeordnet sind, und die mit den genannten Durchlässen (32) in Verbindung stehen.

17. Vorrichtung nach Patentanspruch 12, **dadurch gekennzeichnet**, dass die genannte Platte (15) aus Polythen hergestellt ist.

18. Vorrichtung nach Patentanspruch 1, **dadurch gekennzeichnet**, dass sie eine Düse (47) enthält, die von der Struktur (7) des Längenabtasters (4) auf solche Weise gehalten wird, dass sie einen Druckluftstrahl auf das Rohr (1) richtet, um so alle Unreinheiten zu entfernen.

## Revendications

1. Dispositif pour la commande automatique d'une tête opératrice (3) d'une coupeuse (2), pour former de petites longueurs de tube (1) à partir d'un tube (1) alimenté en continu par une machine de moulage (5), dans laquelle la tête opératrice (3) se déplace longitudinalement le long du tube (1) alternativement d'une première position extrème dans laquelle la tête (3) se solidarise du tube (1) et translate avec celui-ci le long de la coupeuse(2) et coupe le tube en une seconde position extrème dans laquelle la tête (3) se désolidarise du tube (1) et inverse son mouvement par rapport au déplacement du tube (1) qui continue à avancer le long de la coupeuse (2); la tête retourne alors dans sa première position;
Ledit dispositif est caractérisé par le fait qu'il comprend:
- un détecteur (4) de la longueur du tube (1) ayant une structure de support (7) qui supporte deux rouleaux (14) autour desquels au moins une chenille (8) est enroulée pour former un anneau de manière à permettre une libre rotation;
- un support (6) pour ledit détecteur (4) de la longueur fixé à la tête (3) de la coupeuse (2) de manière à maintenir ladite chenille (8) alignée et en contact avec la superficie externe du tube (1) de manière à ce que ladite chenille (8) soit mise en mouvement sur la structure (7) du détecteur (4) de la longueur par le mouvement du tube (1) lui-même;
- un transducteur (11) accouplé à la chenille (8) servant à détecter la longueur du tube (1) reçu de ladite coupeuse (2);
- des moyens de contrôle (12) interfacés avec ledit transducteur (11) et ladite tête opératrice (3) de manière à recevoir les signaux provenant du transducteur (11), et à les élaborer au moins en relation à une longueur prédéterminée du morceau de tube (1) et à activer et désactiver la tête opératrice (3).

2. Un dispositif selon la revendication 1, caractérisé en ce qu'il comprend un détecteur (13) de l'épaisseur du tube (1) fixé audit support (6) et interfacé avec les moyens de contrôle (12) de manière à leur comuniquer l'épaisseur du tube (1) qui est détectée lorsque le tube se déplace vers la coupeuse (2).

3. Un dispositif selon la revendication 1, caractérisé par le fait que ladite chenille (8) est montée sur ladite structure (7) de manière flotante de manière à ce qu'il puisse s'adapter automatiquement à la superficie externe (10) du tube (1).

4. Un dispositif selon la revendication 1, caractérisé par le fait que la structure (7) comprend une plaque (15) disposée entre les rouleaux (14); ladite plaque comprend des extrémités (31) conformées de manière à délimiter, avec lesdits rouleaux (14), au moins un passage (32) pour un fluide pressurisé.

5. Un dispositif selon la revendication 1, caractérisé par le fait que ladite structure (7) du détecteur (4) de la longueur comprend une plaque (15) montée de manière à rencontrer la chenille (8) au moins sur sa zone en contact avec la superficie externe (10) du tube (1).

6. Un dispositif selon la revendication 1, caractérisé par le fait que ledit support (6) comprend au moins un bras (16) saillant par rapport au support (6) lui-même; ledit bras (16) supporte le détecteur (4) de la longueur en son extrémité libre (17).

7. Un dispositif selon la revendication 1, caractérisé par le fait que ledit transducteur (11) comprend un encodeur.

8. Un dispositif selon la revendication 2, caractérisé par le fait que ledit détecteur (13) de l'épaisseur du tube (1) comprend un capteur capacitif.

9. Un dispositif selon la revendication 2, caractérisé par le fait que ledit support (6) comprend un dispositif (18) mobile selon l'actionnement du vérin (19) de manière à varier la position du détecteur (13) de l'épaisseur par rapport au tube (1) selon la variation des dimensions d'encombrement dudit tube (1); ledit dispositif (18) maintient constante l'orientation du détecteur (13) de l'épaisseur par rapport à l'axe central (20) du tube (1).

10. Un dispositif selon la revendication 2, caractérisé par le fait que ledit détecteur (13) de l'épaisseur est monté de manière élastique de manière à osciller sur ledit support (6).

11. Un dispositif selon la revendication 4 ou 5, caractérisé par le fait que ladite structure (7) comprend des moyens (21) d'alimentation de fluide pressurisé pour le détecteur (4) de la longueur.

12. Un dispositif selon la revendication 5, caractérisé par le fait que ladite plaque (15) est réalisée dans un matériau ayant un faible coefficient de friction.

13. Un dispositif selon la revendication 5, caractérisé par le fait que ladite plaque (15) est pourvue d'une pluralité de canaux (22) pour envoyer le fluide pressurisé entre la plaque (15) et la chenille (8).

14. Un dispositif selon la revendication 6, caractérisé par le fait que ledit support (6) comprend deux butées fixes (23); ledit bras (16) est fixé sur le support (6) entre lesdites butées (23) de manière à permettre sa rotation pour qu'il soit soutenu en saillie et oscille angulairement.

15. Un dispositif selon la revendication 9, caractérisé par le fait que ledit dispositif mobile (18) comprend au moins une liaison à quadrilatère pourvue de deux balanciers (25) montés rotativement sur la structure (27) de la coupeuse (2) en leur première extrémité (26); ledit dispositif mobile comprend également une bielle (28) reliée aux extrémités opposées (29) des balanciers (25) de manière à pivoter, pendant que la bielle (28) soutient ledit détecteur (13) de l'épaisseur en une de ses parties (30) saillante de ladite liaison à quadrilatère de manière à la maintenir constament mobile sur une verticale (90) par rapport au tube (1).

16. Un dispositif selon la revendication 11, caractérisé par le fait que les canaux (22) comprennent des collecteurs (37) situés sur ladite plaque (15) qui comuniquent avec lesdits passages (32).

17. Un dispositif selon la revendication 12, caractérisé par le fait que ladite plaque (15) est réalisée en polyéthylène.

18. Un dispositif selon la revendication 1, caractérisé par le fait qu'il comprend une buse (47) supportée par la structure (7) du détecteur (4) de la longueur de manière à diriger un jet d'air comprimé sur le tube (1) pour éliminer toutes les impurités.
